# EUROPEAN PATENT APPLICATION

(11) **EP 2 458 371 A1**
(43) Date of publication of application: **30.05.2012**
(21) Application number: 10802243.5
(22) Date of filing: 16.07.2010
(51) Int. Cl.: G01N 21/896, B23K 26/00, C03C 23/00, G02F 1/13

(54) **GLASS MEMBER QUALITY CONTROL METHOD AND QUALITY CONTROL DEVICE, AND GLASS MEMBER WITH MARK**

(30) Priority: 24.07.2009 JP 2009173438
(71) Applicant: Asahi Glass Company, Limited, Tokyo 100-8405 (JP)
(72) Inventor: TSUDA Masahiro, Tokyo 100-8405 (JP)
(74) Representative: Müller-Boré & Partner Patentanwälte
(86) International application number: PCT/JP2010/062117
(87) International publication number: WO 2011/010623

(57) **Abstract**

A quality control method for a glass member includes a marking step of putting, in a prescribed position on a glass member, a reference mark to be used as a reference point indetectingaposition of a defect of the glass member in a prescribed range from the prescribed position.

## Description

### TECHNICAL FIELD

The present invention relates to a quality control method and a quality control apparatus for a glass member and a marked glass member.

### BACKGROUND ART

Recently, display panels such as a liquid crystal panel (LCD), an organic EL panel (OLED), a plasma display panel and a field emission display have been increased in size and decreased in thickness, and hence, glass substrates for use in the display panels required of high quality have been also increased in size and decreased in thickness. Therefore, it has become difficult to fabricate a glass substrate free from a defect.

On the other hand, Patent Document 1 describes a technique to put a mark corresponding to quality information (defect information) or identification information in a prescribed position on a glass substrate. The quality information includes the number, the sizes, the depths, the positions and the like of defects. When a glass substrate is supplied to a subsequent process (including the trade) together with its quality information, a glass substrate having a defect may be efficiently used in destination of the supply of the glass substrate.

### PRIOR ART DOCUMENT

### PATENT DOCUMENT

Patent Document 1: Japanese Laid-Open Patent Publication No. 2006-039725

### SUMMARY OF THE INVENTION

### PROBLEM TO BE SOLVED BY THE INVENTION

In the technique described in Patent Document 1, however, when a glass substrate is to be used on the basis of the quality information, a distance from a reference position (such as a corner on the tip side) of the glass substrate is measured, and hence, a measurement error is increased as the distance from the reference position is larger. Therefore, the position of a defect may not be accurately grasped in some cases due to the size increase of the glass substrate.

In particular, it has been recently proposed to supply, to a subsequent process, a continuous flexible glass substrate wound up into a roll, and in this case, the dimension along the lengthwise direction of the glass substrate may be 30 m or more. When the dimension along the lengthwise direction of the glass substrate is 30 m or more, the aforementioned problem particularly surfaces.

Since a proportion of the cost of a glass substrate in the whole fabrication cost of a display panel is small, if a failure derived from a defect of a glass substrate is found after the fabrication of a display panel, it results in a lot of waste.

The present invention was achieved in consideration of the aforementioned problem, and an object of the invention is providing a quality control method and a quality control apparatus for a glass member by which a glass member having a defect may be efficiently used, and a marked glass member.

### MEANS FOR SOLVING THE PROBLEM

In order to overcome the aforementioned problem, the quality control method for a glass member of this invention includes a marking step of putting, in a prescribed position on a glass member, a reference mark to be used as a reference point in detecting a position of a defect of the glass member in a prescribed range from the prescribed position.

Incidentally, the glass member may be in the shape of a roll or a plate, and the shape is not particularly specified. Furthermore, the glass member may have a thickness of 0.3 mm or less, or may be flexible. The present invention exhibits, however, particularly excellent effects when it is applied to a glass member having a thickness of 0.3 mm or less and in the shape of a roll.

Also, the quality control apparatus for a glass member of this invention includes a marking device for putting, in a prescribed position on a glass member, a reference mark to be used as a reference point in detecting a position of a defect of the glass member in a prescribed range from the prescribed position.

Moreover, the marked glass member of this invention includes a reference mark, put in a prescribed position on the glass member, to be used as a reference point in detecting a position of a defect of the glass member in a prescribed range from the prescribed position.

### EFFECT OF THE INVENTION

The present invention provides a quality control method and a quality control apparatus for a glass member by which a glass member having a defect may be efficiently used, and a marked glass member.

### BRIEF DESCRIPTION OF THE DRAWINGS

FIG. 1 is a flow chart illustrating a method for fabricating a glass substrate.
FIG. 2 is a flow chart illustrating a quality control method for a glass substrate according to Embodiment 1 of the invention.
FIG. 3 is a schematic diagram illustrating a quality control apparatus for a glass substrate according to Embodiment 1 of the invention.
FIG. 4 is a plan view partially illustrating a marked glass substrate according to Embodiment 1 of the invention.
FIG. 5 is a plan view illustrating an example of a use area and a non-use area of the marked glass substrate 10 to be employed in destination.
FIG. 6 is a schematic diagram illustrating an example of an image obtained by an imaging device 16a.
FIG. 7 is a schematic diagram illustrating an example of a two-dimensional coordinate system set in the image of FIG. 6.
FIG. 8 is a flow chart illustrating a quality control method for a glass substrate according to Embodiment 2 of the invention.
FIG. 9 is a plan view partially illustrating a marked glass substrate according to Embodiment 2 of the invention.
FIG. 10 is a plan view illustrating a modification of the marked glass substrate of FIG. 9.
FIG. 11 is a plan view illustrating another modification of the marked glass substrate of FIG. 9.
FIG. 12 is a schematic diagram illustrating a quality control apparatus for a glass substrate according to Embodiment 3 of the invention.
FIG. 13 is a flow chart, following the flow chart of FIG. 2, illustrating the quality control method for the glass substrate 10.

### MODES FOR CARRYING OUT THE INVENTION

Now, modes for carrying out the present invention will be described with reference to the accompanying drawings. Incidentally, although embodiments are described by way of application of the invention to a glass substrate for use in a display panel required of high quality, the invention is applicable not only to a glass substrate for use in a solar battery or a glass substrate for use in an electric device such as a glass substrate for use in a hard disc but also to a general glass plate such as a building glass plate or a vehicle glass plate.

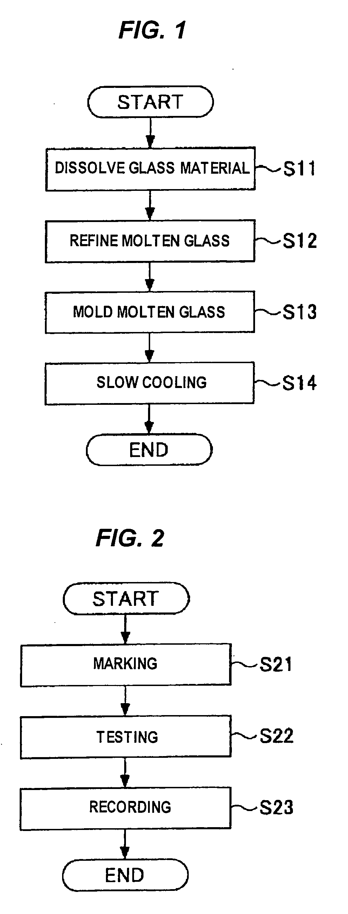

FIG. 1 is a flow chart illustrating a method for fabricating a glass substrate.

First, a glass material is introduced into a glass dissolver to be dissolved (step S11). Molten glass thus dissolved moves to a downstream side in the glass dissolver and flows into a refining tank.

Subsequently, air bubbles included in the molten glass placed in the refining tank are released for refining (step S12).

Thereafter, the molten glass obtained after the refining is molded into a plate shape (step S13). For example, fusion or float is employed as the molding method. In the fusion, portions of the molten glass obtained after the refining respectively flowing down on side faces of a mold having a wedge cross-section come together to be integrated with each other below the lower edge of the mold and to be drawn out downward into a plate shape. Alternatively, in the float, the molten glass obtained after the refining flows onto a molten metal (such as molten tin) placed in a float tank so as to be formed into a plate shape owing to the smooth surface of the molten metal.

Ultimately, the thus molded plate glass is slowly cooled (step S14), and thus, a glass substrate is fabricated. After the slow cooling of step S14, the glass substrate may be cut, polished or washed if necessary. It is noted that the glass substrate may be cut after step S23 described later.

Next, a quality control method for a glass substrate will be simply described with reference to FIG. 2.

FIG. 2 is a flow chart illustrating a quality control method for a glass substrate according to Embodiment 1 of the invention.

In marking step (of step S21), a reference mark is put in a prescribed position on a glass substrate. A reference mark is a mark to be used in destination of the glass substrate as a reference point in detecting the position of a defect of the glass substrate in a prescribed range from the prescribed position. It is noted that the prescribed range is appropriately set in accordance with, for example, a method for detecting the position of a defect, and the prescribed range is preferably a range up to 10 m and more preferably a range up to 3 m.

In testing step (of step S22), the quality of the glass substrate is tested. Items to be tested are, for example, presence of a defect and the position (including the size) and the type of the defect if there is any. The type of a defect is, for example, contaminant, a bubble, a surface scar or the like.

In the testing step (of step S22) of this embodiment, the presence of a defect and the position (including the size) and the type of the defect if there is any are detected within the prescribed range (up to, for example, 10 m (preferably 3 m)) from a reference point with the reference mark put in the marking step used as the reference point.

In recording step (of step S23), identification information of the reference mark put in the marking step and position information of the defect detected in the testing step are recorded in a recording medium in association with each other.

In recording step (of step S23) of this embodiment, the identification information of the reference mark used in the detection in the testing step and the position information of the defect detected in the testing step are recorded in a recording medium in association with each other.

The recording medium may be the glass substrate apart from paper, an optical recording medium or a magnetic recording medium. When the information is recorded in the glass substrate, a mark corresponding to quality information (including the position information of a defect and the identification information of the reference mark) of the glass substrate is put in the prescribed position on the glass substrate. In this manner, the quality information of the glass substrate 10 may be read in the destination of the glass substrate.

The quality information of the glass substrate may be supplied in the form of a recording medium of paper or the like or may be supplied through the Internet. When the quality information of the glass substrate is supplied separately from the glass substrate, identification information (an ID code) for identifying the glass substrate is marked on the glass substrate, and the quality information and the identification information are supplied as a set.

In this manner, the glass substrate having the reference mark put thereon is supplied together with the quality information to a subsequent process (including the trade). Therefore, even a glass substrate, which is conventionally corrected for a defect or disposed because it has a defect in a part thereof, maybe directly sent as a glass substrate that may be used in a part other than the defect. Accordingly, degradation in fabrication efficiency and waste of resource may be improved. This effect is more remarkably exhibited as the size of the glass substrate is larger.

In the destination of the glass substrate, an area to be used may be appropriately selected on the basis of the position and the type of the defect included in the quality information. Thus, also in the destination of the glass substrate, the fabrication efficiency may be improved and the cost may be lowered.

Furthermore, in the destination of the glass substrate, the position of the defect may be accurately detected on the basis of the reference mark put on the glass substrate and the quality information.

In a conventional glass substrate, when the glass substrate is to be used on the basis of its quality information, a distance from a reference position (such as a corner on the tip side) of the glass substrate is measured, and hence, there arises a problem that a measurement error is larger as the distance from the reference position is larger, and accordingly, the position of a defect may not be accurately detected in some cases. When the dimension along the lengthwise direction of the glass substrate is 30 m or more, this problem particularly surfaces.

In contrast, since the position of the defect included in the quality information is given based on the reference mark put in the prescribed range from the position of the defect in this embodiment, the position of the defect may be accurately detected on the basis of the reference mark and the quality information, and the glass substrate may be efficiently used. This effect is more remarkably exhibited as the size of the glass substrate is larger and is particularly remarkably exhibited when the dimension along the lengthwise direction of the glass substrate is 30 m or more.

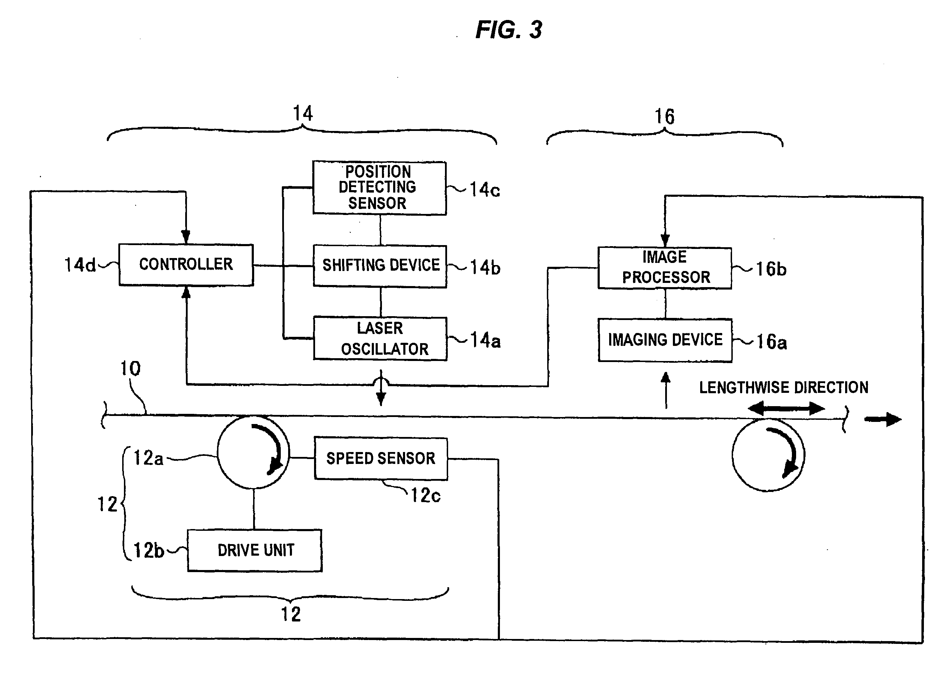

A quality control apparatus for a glass substrate will now be described with reference to FIG. 3.

FIG. 3 is a schematic diagram illustrating the quality control apparatus for a glass substrate according to Embodiment 1 of the invention.

The quality control apparatus for a glass substrate exemplified in FIG. 3 includes a conveying device 12, a marking device 14 and a testing device 16.

The conveying device 12 is a device for conveying the glass substrate 10 obtained after the slow cooling of step S14 of FIG. 1. For example, the conveying device 12 includes a roller 12a for carrying the glass substrate 10, a drive unit 12b for rotatively driving the roller 12a, a speed sensor 12c for detecting the carrying speed for the glass substrate 10 and the like. The speed sensor 12c may be, for example, a rotational speed sensor for detecting the rotational speed of the roller 12a, and outputs the detection result to the marking device 14 every prescribed period of time.

The marking device 14 is means for putting a mark in a prescribed position on the glass substrate 10. The marking device 14 is, for example, a device for drawing a mark by processing the glass substrate 10 through irradiation of a prescribed position on the glass substrate 10 with laser, and includes, as illustrated in FIG. 3, a laser oscillator 14a, a shifter 14b, a position detecting sensor 14c, a controller 14d and the like.

The laser oscillator 14a is supported to be movable against the conveying device 12, and oscillates laser beams toward the surface of the glass substrate 10 under control of the controller 14d. As the laser oscillator 14a, for example, a semiconductor laser, a YAG laser, a CO₂ laser or the like is used.

The shifter 14b is a device for moving the laser oscillator 14a against the conveying device 12 under control of the controller 14d, and includes, for example, an electric motor or the like.

The position detecting sensor 14c is a sensor for detecting the position of the laser oscillator 14a against the conveying device 12, and includes, for example, a revolving speed sensor for detecting the revolving speed of the electric motor of the shifter 14b.

The controller 14d includes a microcomputer or the like and draws a mark by controlling the outputs of the laser oscillator 14a and the shifter 14b in accordance with an output signal or the like supplied from the speed sensor 12c or the position detecting sensor 14c.

Incidentally, the marking device 14 of this embodiment is the means for drawing a mark by processing the glass substrate 10 through the irradiation of a prescribed position on the glass substrate 10 with laser, which does not limit the invention. The marking device 14 may be, for example, a device for printing a mark by jetting an ink or a device for forming a mark through evaporation, sputtering or the like in a prescribed position on the glass substrate 10. Among marks thus formed, a mark drawn through the laser irradiation is superior in chemical resistance and heat resistance because it is drawn by processing the glass substrate 10.

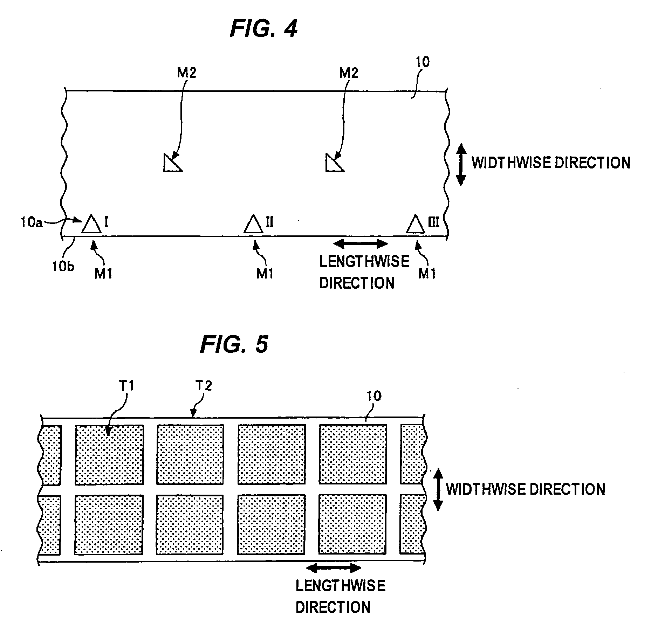

FIG. 4 is a plan view partially illustrating a marked glass substrate according to Embodiment 1 of the invention. In FIG. 4, reference marks M1 and M2 put by the marking device 14 are exaggeratedly shown.

In the marked glass substrate exemplified in FIG. 4, the reference marks M1 and M2 are arranged on the glass substrate 10 in a zigzag manner.

A plurality of first reference marks M1 are arranged along the lengthwise direction of the glass substrate 10 in an edge part 10a of the glass substrate 10. The plural first reference marks M1 may be provided, for example, at equal intervals as illustrated in FIG. 4 or provided at unequal intervals.

The first reference marks M1 are marks to be used in the destination of the glass substrate 10 as reference points in detecting the positions of defects of the glass substrate 10. Each first reference mark M1 is expressed as a pattern, a character, a numeric character, a symbol or a combination thereof. For example, each first reference mark M1 may be expressed as a combination of a pattern and an identification code.

The identification code is a code for identifying each of the plural first reference marks M1 and is expressed as, for example, a Roman number as illustrated in FIG. 4. When the identification code is included in the first reference mark M1, even if the glass substrate 10 is cut in the middle along the lengthwise direction, each of the plural first reference marks M1 may be identified.

Incidentally, for identifying each of the plural first reference marks M1, the total number of first reference marks M1 may be counted from a prescribed position of the glass substrate 10 (such as a corner on the tip side of the glass substrate 10), or a rough distance fromaprescribedpositionof the glass substrate 10 may be measured.

The second reference marks M2 are provided at a prescribed distance from one side face 10b of the glass substrate 10 along the widthwise direction of the glass substrate 10 and are provided plurally along the lengthwise direction of the glass substrate 10.

The second reference marks M2 are marks to be used in the destination of the glass substrate 10 as reference points in detecting the positions of defects of the glass substrate 10 in a similar manner to the first reference marks M1 and are expressed as a pattern or the like. For example, each second reference mark M2 may be expressed as a pattern alone as illustrated in FIG. 4.

The first and second reference marks M1 andM2 maybe expressed as the same pattern or as different patterns. Furthermore, the first and second reference marks M1 and M2 may be expressed in the same color or in different colors.

The first and second reference marks M1 and M2 may be in sizes sufficiently large for visual recognition or in sizes difficult for visual recognition.

The first and second reference marks M1 and M2 are preferably put in positions within areas not to be used in the destination of the glass substrate 10. At this point, the non-use area is not only an area not used in an ultimate product but also an area where the first and second reference marks M1 and M2 do not cause any problem in the ultimate product.

FIG. 5 is a plan view illustrating an example of a use area (to be used for, for example, forming thin film transistors and color filters) and a non-use area of the marked glass substrate 10 in the destination. In FIG. 5, the use area T1 is shown as a dotted area with the non-use area T2 remained white.

In the example of FIG. 5, the first reference marks M1 are preferably provided in the edge part 10a of the glass substrate 10 or on the side face 10b of the glass substrate 10. Furthermore, the second reference marks M2 are preferably provided in the non-use areas T2 set between the use areas T1 adjacent to each other.

Incidentally, although the reference marks M1 and M2 are provided on the glass substrate 10 in a zigzag manner in the example of FIG. 5, the present invention is not limited to this arrangement. The reference marks M1 and M2 may be arranged on the glass substrate 10, for example, in the form of a matrix, or the reference marks M1 alone may be provided on the glass substrate 10. The point is to provide at least one of the plural reference marks M1 and M2 to be included in an image obtained by an imaging device 16a described later. In this manner, the positions for putting the reference marks M1 and M2 may be appropriately set in accordance with the type or the like of the testing device 16.

The testing device 16 is a device for testing the quality of the glass substrate 10. Items to be tested are, for example, presence of a defect, the position (including the size) and the type of the defect, and the like. The type of the defect is, for example, contaminant, a bubble, a surface scar or the like. The quality information including the position and the type of a defect is recorded in a recording medium.

The testing device 16 includes, for example, the imaging device 16a such as a CCD camera, and an image processor 16b such as a microcomputer as illustrated in FIG. 5. The imaging device 16a is installed above the conveying device 12, so as to successively obtain images of prescribed areas of the glass substrate 10 carried by the conveying device 12. The thus obtained image data is successively output to the image processor 16b.

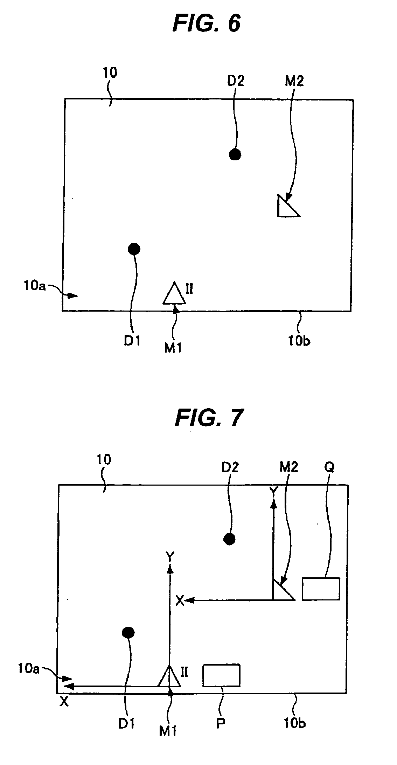

FIG. 6 is a schematic diagram of an example of the image obtained by the imaging device 16a. In FIG. 6, the first and second reference marks M1 and M2 and defects D1 and D2 of the glass substrate 10 are exaggeratedly illustrated.

First, the image processor 16b subjects the image obtained by the imaging device 16a to image processing, so as to detect the presence of a defect in the image, and the position (including the size) and the type of the defect as well as the positions of the first and second reference marks M1 and M2 in the image.

Subsequently, when the image processor 16b detects the presence of a defect in the image, it sets, in the image, a two-dimensional coordinate system using both or at least one of the first reference mark M1 and the second reference mark M2 as a reference point.

FIG. 7 is a schematic diagram of an example of the two-dimensional coordinate system set in the image of FIG. 6.

In the example of FIG. 7, a two-dimensional coordinate system is set with the first reference mark M1 used as the origin, with a direction passing the first reference mark M1 and perpendicular to the side face 10b of the glass substrate 10 set as the Y-axis and with a direction perpendicular to the Y-axis (namely, a direction parallel to the side face 10b of the glass substrate 10) set as the X-axis.

Similarly, a two-dimensional coordinate system is set with the second reference mark M2 used as the origin, with a direction passing the second reference mark M2 and perpendicular to the side face 10b of the glass substrate 10 set as the Y-axis and with a direction perpendicular to the Y-axis (namely, a direction parallel to the side face 10b of the glass substrate 10) set as the X-axis.

Subsequently, the image processor 16b detects the position coordinate of the defect in the thus set two-dimensional coordinate system. The position coordinates in a plurality of two-dimensional coordinate systems may be detected with respect to one defect.

Ultimately, the image processor 16b records, in a recording medium, mark identification information for identifying the reference mark M1 or M2 used in the detection of the position information (position coordinate data) of the defect and the position information of the detected defect in association with each other.

The mark identification information includes an identification code (of, for example, a Roman number) included in the reference mark M1 or M2, a rough distance along the lengthwise direction of the glass substrate 10 between the reference mark M1 or M2 and a reference position (such as a corner on the tip side) of the glass substrate 10, the total number of reference marks M1 or M2 provided from the reference position of the glass substrate 10, and the like.

It is noted that the image processor 16b may output the quality information (including the position information of the defect and the mark identification information of the reference mark) to the marking device 14 when it detects the position of the defect.

When the marking device 14 receives the quality information from the image processor 16b, it puts a quality mark corresponding to the quality information in a prescribed position on the glass substrate 10 (for example, in the vicinity (in a region P or Q) of both or at least one of the first mark M1 and the second mark M2 used as the reference points in detecting the position of the defect).

The quality mark is expressed as a pattern, a character, a numeric character, a symbol, a bar code, a QR code or a combination thereof. Thus, the quality information may be read from the quality mark put on the glass substrate 10 in the destination of the glass substrate 10.

Incidentally, the quality mark may be put in the edge part 10a or on the side face 10b of the glass substrate 10 in a portion corresponding to the position of the defect of the glass substrate 10 or may be put in the position of the defect of the glass substrate 10. Thus, the position (including the size) of the defect D of the glass substrate 10 may be easily detected.

As described so far, according to this embodiment, the position of a defect included in quality information is given based on a reference mark provided in a prescribed range from the position of the defect, and hence, the position of the defect may be accurately detected and the glass substrate 10 may be efficiently used. This effect is more remarkably exhibited as the size of the glass substrate 10 is larger.

Furthermore, according to this embodiment, since the plural reference marks M1 and M2 are provided along the lengthwise direction of the glass substrate 10, even when the dimension along the lengthwise direction of the glass substrate 10 is 30 m or more, the position of a defect may be accurately detected on the basis of the reference marks M1 and M2 and the quality information.

Moreover, according to this embodiment, since the plural reference marks M1 are provided to be identifiable, even when the glass substrate 10 is cut in the middle along the lengthwise direction thereof, each reference mark M1 may be identified.

It is noted that both or at least one of the image processor 16b and the marking device 14 corresponds to the recording device of the present invention in this embodiment.

Next, Embodiment 2 of the invention will be described.

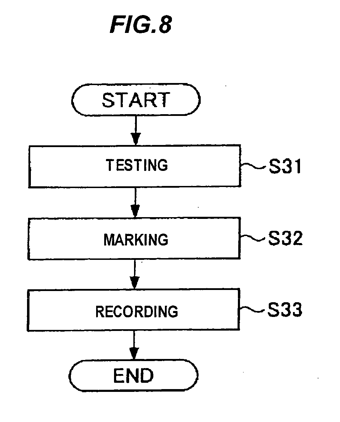

FIG. 8 is a flow chart illustrating a quality control method for a glass substrate according to Embodiment 2 of the invention.

In Embodiment 1, the reference marks M1 and M2 are provided in the prescribed positions on the glass substrate 10 (step S21), and the position of a defect of the glass substrate 10 caused in a prescribed range (up to, for example, 10 m (preferably up to 3 m)) from a reference point with the reference mark M1 or M2 used as the reference point is detected by the testing device 16 (step S22).

In contrast, in this embodiment, the position of a defect on the glass substrate 10 is detected (step S31), and a reference mark is put in a prescribed range (up to, for example, 10 m (preferably up to 3 m)) from the detected position of the defect (step S32).

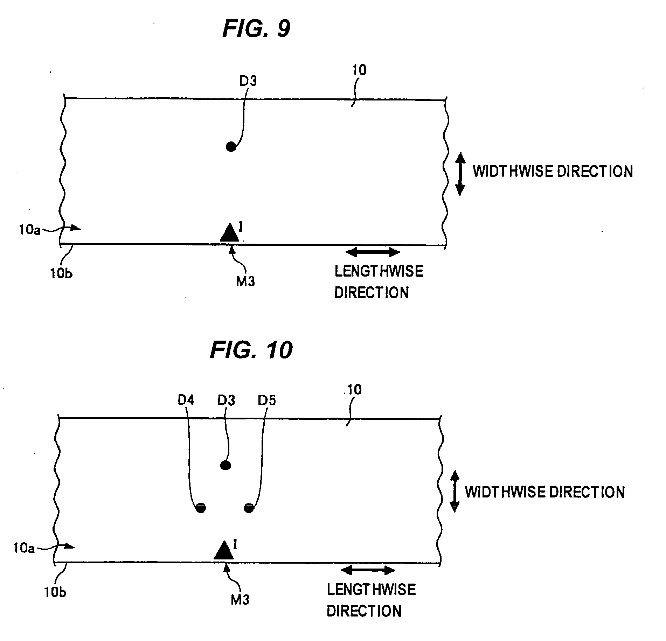

FIG. 9 is a plan view partially illustrating a marked glass substrate according to Embodiment 2 of the invention. In FIG. 9, a reference mark M3 put by the marking device 14 of FIG. 3 and a defect D3 of the glass substrate 10 are exaggeratedly illustrated.

The third reference mark M3 is a mark to be used as a reference point in detecting the position of a defect of the glass substrate 10 in the destination of the glass substrate 10 similarly to the first and second reference marks M1 and M2. The third reference mark M3 is expressed as a pattern, a character, a numeric character, a symbol or a combination thereof. Forexample, the third reference mark M3 may be expressed as a combination of a pattern and an identification code. This identification code is a code for identifying each of a plurality of third reference marks M3 and is expressed, for example, as a Roman number as illustrated in FIG. 9.

The position for putting the third reference mark M3 is set within a prescribed range (up to, for example, 10 m (preferably up to 3 m)) from the position of the defect D3 detected by the testing device 16 of FIG. 3. Thus, differently from Embodiment 1, there is no reference mark M3 in an area having no defect within the prescribed range. Therefore, it is possible to suppress change of a reference mark M3 into a defect in the destination of the glass substrate 10.

The position for putting the third reference mark M3 is preferably set so that an image obtained in the destination of the glass substrate 10 may include the third reference mark M3 and the defect D3. Furthermore, from the viewpoint of the efficiency in using the glass substrate 10, the position for putting the third reference mark M3 is preferably in a non-use area T2 employed by the destination of the glass substrate 10. A position meeting these conditions is, for example, a portion in the edge part 10a or on the side face 10b of the glass substrate 10 corresponding to the defect D3 (i.e., opposing the defect D3 along the widthwise direction of the glass substrate 10) as illustrated in FIG. 9. In this case, the third reference mark M3 also works as a quality mark corresponding to quality information (the position of the defect).

FIG. 10 is a plan view illustrating a modification of FIG. 9. In FIG. 10, a reference mark M3 put by the marking device 14 of FIG. 3 and defects D3 to D5 of the glass substrates 10 are exaggeratedly illustrated.

As illustrated in FIG. 10, in the case where there are other defects D4 and D5 in the vicinity of one defect D3, merely one third reference mark M3 may be put in a prescribed range from the positions of the plural defects D3 to D5. In other words, the position for putting the third reference mark M3 may be set to be away from an adjacent (last) third reference mark M3 by a prescribed distance or more. Thus, the number of reference marks M3 to be set may be further reduced.

In this manner, the reference mark M3 is put in a prescribed position on the glass substrate 10 (step S32) and a relative position of the reference mark M3 against the position of the defect is measured. This measurement is conducted on the basis of an output signal from, for example, the speed sensor 12c, the position detecting sensor 14c, or the like.

Subsequently, position information of the defect with the reference mark M3 used as the reference point is created, and the thus created position information of the defect is recorded in a recording medium in association with the identification information of the reference mark M3 (step S33). The recording medium may be the glass substrate 10 apart from paper, an optical recording medium or a magnetic recording medium.

Also in this embodiment, the position of a defect included in quality information is given based on a reference markM3 provided in a prescribed range from the position of the defect in the same manner as in Embodiment 1, and hence, the position of the defect may be accurately detected in the destination of the glass substrate 10 and the glass substrate 10 may be efficiently used. This effect is more remarkably exhibited as the size of the glass substrate 10 is larger, and it is particularly remarkable when the dimension along the lengthwise direction of the glass substrate 10 is 30 m or more.

Furthermore, according to this embodiment, since the reference mark M3 is provided in the prescribed range from the position of the defect of the glass substrate 10, there is no reference mark M3 in an area having no defect in the prescribed range. Therefore, it is possible to suppress change of a reference mark M3 into a defect in the destination of the glass substrate 10.

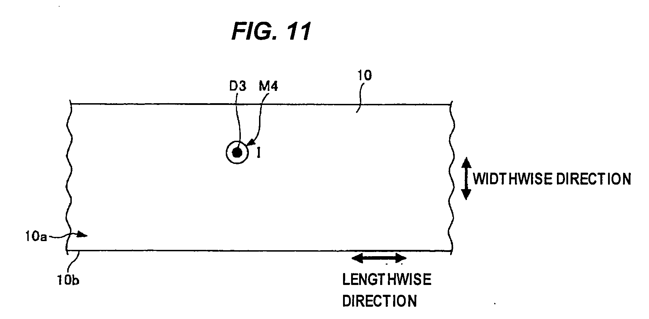

FIG. 11 is a plan view illustrating still another modification of FIG. 9. In FIG. 11, a reference mark M4 put by the marking device 14 of FIG. 3 and a defect D3 of the glass substrate 10 are exaggeratedly illustrated.

The fourth reference mark M4 is a mark to be used as a reference point in detecting the position of a defect of the glass substrate 10 in the destination of the glass substrate 10 similarly to the first and second reference marks M1 and M2. The fourth reference mark M4 is expressed as a pattern, a character, a numeric character, a symbol or a combination thereof. For example, the fourth reference mark M4 may be expressed as a combination of a pattern and an identification code. This identification code is a code for identifying each of a plurality of fourth reference marks M4 and is expressed, for example, as a Roman number as illustrated in FIG. 9.

The fourth reference mark M4 is put in the position of the defect D3 detected by the testing device 16 of FIG. 3, and works also as a quality mark corresponding to the quality information (the position of the defect). Thus, since the position information of the defect may be read from the glass substrate 10 in the destination of the glass substrate 10, there is no need to conduct the recording step (step S33) of FIG. 9.

The fourth reference mark M4 may be expressed to be recognizable in accordance with the type of the defect D3. For example, the fourth reference mark M4 may be expressed in a color different in accordance with the type of the defect D3 or expressed as a different identification code. Thus, information on the type of the defect may be read from the glass substrate 10 in the destination of the glass substrate 10.

It is noted that both the fourth reference mark M4 of FIG. 11 and the third reference mark M3 of FIG. 9 may be put on the glass substrate 10.

It is noted that both or at least one of the image processor 16b and the marking device 14 corresponds to the recording device of the present invention in this embodiment.

Next, Embodiment 3 of the invention will be described.

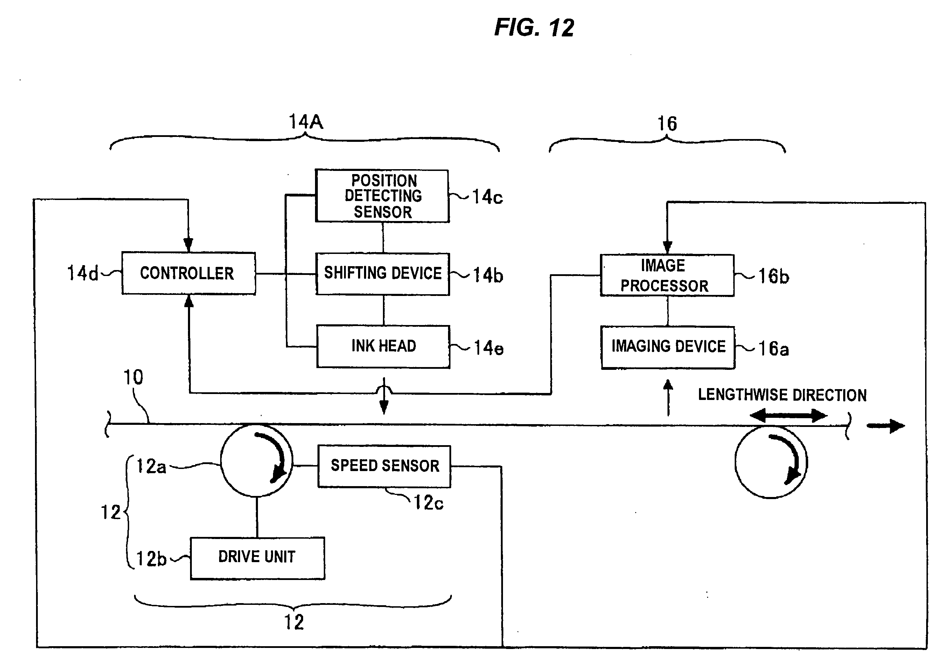

First, a quality control apparatus for a glass substrate will be described with reference to FIG. 12.

FIG. 12 is a schematic diagram illustrating the quality control apparatus for a glass substrate according to Embodiment 3 of the invention. In FIG. 12, like reference numerals are used to refer to like elements illustrated in FIG. 3 so as to omit the description.

In Embodiment 1 described above, the marking device 14 is a device for drawing a mark by processing the glass substrate 10 through the irradiation of a prescribed position on the glass substrate 10 with laser, and includes the laser oscillator 14a, the shifter 14b, the position detecting sensor 14c, the controller 14d and the like as illustrated in FIG. 3.

In contrast, a marking device 14A of this embodiment is a device for printing a mark by jetting an ink to a prescribed position on the surface of the glass substrate 10 and includes an ink head 14e instead of the laser oscillator 14a.

The ink head 14e is supported movably against the conveying device 12 and jets an ink onto the surface of the glass substrate 10 under control of the controller 14d.

The material for the ink is not particularly specified, and a material removable from the surface of the glass substrate 10 is suitably used. An example of such a material is a water-color ink that may be removed by cleaning. In this manner, a mark may be erased from the surface of the glass substrate 10 without damaging the surface of the glass substrate 10 in the destination of the glass substrate 10. Accordingly, the glass substrate 10 may be more efficiently used in the destination of the glass substrate 10.

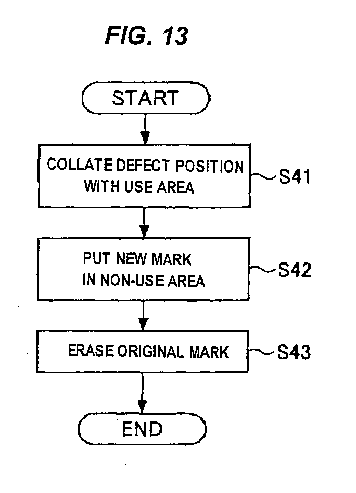

Next, a quality control method for the glass substrate 10 performed in the destination of the glass substrate 10 will be described with reference to FIG. 13.

FIG. 13 is a flow chart, following the method illustrated in FIG. 2, illustrating the quality control method for the glass substrate 10.

First, the position of the defect is collated with a use area T1 (step S41). In this collation, a pattern as that illustrated in FIG. 5 is employed. A plurality of patterns as that illustrated in FIG. 5 may be prepared, so as to select a pattern including the smallest number of defects in the use area T1. Thus, the glass substrate 10 is efficiently used.

Subsequently, a reference mark to be used as a reference point in detecting the position of the defect of the glass substrate 10 is newly put in a non-use area T2 of the pattern optimally selected in step S41 (step S42). This reference mark is put with the reference mark having been put by a supplier used as a reference point. Therefore, the position of the defect with the new reference mark used as a reference point is calculated. This reference mark may be drawn by processing the glass substrate 10 through, for example, the laser irradiation.

Ultimately, the mark having been put by the supplier is erased (step S43).

In this manner, the position of the mark having been put by the supplier may be easily changed in the destination of the glass substrate 10, and hence, the glass substrate 10 maybe further more efficiently used.

Incidentally, although the position of the mark is changed in the destination in this embodiment, the position of the mark may be changed by the supplier in accordance with change or the like of the destination.

The embodiments of the present invention have been described so far, and the invention is not limited to the aforementioned embodiments but various modifications and replacements may be caused in the embodiments without departing from the scope of the invention.

The present invention has been described in detail by way of the specific embodiments so far, and it goes without saying that various modifications and corrections may be made without departing the spirit and the scope of the invention.
The present application is based upon and claims the benefit of priority from Japanese Patent Application (No. 2009-173438) filed on July 24 , 2009, the entire contents of which are incorporated herein by reference.

### EXPLANATION OF REFERENCE NUMERALS

- 10: glass substrate
- 12: conveying device
- 14: marking device
- 16: testing device

## Claims

1. A quality control method for a glass member, comprising:
a marking step of putting, in a prescribed position on a glass member, a reference mark to be used as a reference point in detecting a position of a defect of the glass member in a prescribed range from the prescribed position.

2. The quality control method for a glass member according to claim 1, further comprising:
a testing step of detecting presence and a position of a defect of the glass member in the prescribed range from the reference point with the reference mark put in the marking step used as the reference point; and
a recording step of recording, in a recording medium, identification information of the reference mark used in detection of the testing step and position information of the detected defect in association with each other.

3. The quality control method for a glass member according to claim 1, further comprising:
a testing step of detecting presence and a position of a defect of the glass member,
wherein the reference mark is put in the prescribed range from the position of the detected defect in the marking step.

4. The quality control method for a glass member according to claim 3, further comprising:
a recording step of recording, in a recoding medium, identification information of the reference mark put in the marking step and position information of the defect with the reference mark used as the reference point in association with each other.

5. The quality control method for a glass member according to claim 3 or 4,
wherein the reference mark is put in an edge part or on a side face of the glass member in a portion corresponding to the position of the defect in the marking step.

6. The quality control method for a glass member according to any of claims 3 to 5,
wherein the reference mark is put in the position of the defect in the marking step.

7. The quality control method for a glass member according to any of claims 1 to 6,
wherein the reference mark is put on a surface of the glass member by using a material removable from the surface of the glass member.

8. The quality control method for a glass member according to claim 7,
wherein the material removable from the surface of the glass member is an ink removable through cleaning.

9. The quality control method for a glass member according to any of claims 1 to 8,
wherein the glass member is a glass substrate for use in a display panel.

10. A quality control apparatus for a glass member, comprising:
a marking device for putting, in a prescribed position on a glass member, a reference mark to be used as a reference point in detecting a position of a defect of the glass member in a prescribed range from the prescribed position.

11. The quality control apparatus for a glass member according to claim 10, further comprising:
a testing device for detecting presence and a position of a defect of the glass member in the prescribed range from the reference point with the reference mark put by the marking device used as the reference point; and
a recording device for recording, in a recording medium, identification information of the reference mark used in detection by the testing device and position information of the detected defect in association with each other.

12. The quality control apparatus for a glass member according to claim 10, further comprising:
a testing device for detecting presence and a position of a defect of the glass member,
wherein the marking device puts the reference mark in the prescribed range from the position of the detected defect.

13. The quality control apparatus for a glass member according to claim 12, further comprising:
a recording device for recording, in a recoding medium, identification information of the reference mark put by the marking device and position information of the defect with the reference mark used as the reference point in association with each other.

14. The quality control apparatus for a glass member according to claim 12 or 13,
wherein the marking device puts the reference mark in an edge part or on a side face of the glass member in a portion corresponding to the position of the defect.

15. The quality control apparatus for a glass member according to any of claims 12 to 14,
wherein the marking device puts the reference mark in the position of the defect.

16. The quality control apparatus for a glass member according to any of claims 10 to 15,
wherein the reference mark is put on a surface of the glass member by using a material removable from the surface of the glass member.

17. The quality control apparatus for a glass member according to claim 16,
wherein the material removable from the surface of the glass member is an ink removable through cleaning.

18. The quality control apparatus for a glass member according to any of claims 10 to 17,
wherein the glass member is a glass substrate for use in a display panel.

19. A marked glass member comprising a reference mark, put in a prescribed position on the glass member, to be used as a reference point in detecting a position of a defect of the glass member in a prescribed range from the prescribed position.

20. The marked glass member according to claim 19,
wherein the glass member has a dimension along a lengthwise direction thereof of 30 m or more, and
the reference mark is provided plurally along the lengthwise direction of the glass member.

21. The marked glass member according to claim 20,
wherein the plural reference marks are expressed to be identifiable.

22. The marked glass member according to claim 19,
wherein the prescribed position is set in an edge part or on a side face of the glass member in a portion corresponding to the position of the defect of the glass member.

23. The marked glass member according to claim 19,
wherein the prescribed position is set in the position of the defect of the glass member.

24. The marked glass member according to any of claims 19 to 23,
wherein the reference mark is put on a surface of the glass member by using a material removable from the surface of the glass member.

25. The marked glass member according to claim 24,
wherein the material removable from the surface of the glass member is an ink removable through cleaning.

26. The marked glass member according to any of claims 19 to 25,
wherein the glass member is a glass substrate for use in a display panel.
